# EUROPEAN PATENT APPLICATION

(11) **EP 4 700 808 A1**
(43) Date of publication of application: **25.02.2026**
(21) Application number: 24195546.7
(22) Date of filing: 21.08.2024
(51) Int. Cl.: H01F 38/14, H01F 27/28, H01Q 7/00, H02J 50/10

(54) **INDUCTIVE WIRELESS POWER TRANSFER DEVICE AND SYSTEM USING SAME**

(71) Applicant: Stichting IMEC Nederland, 5656 AE Eindhoven (NL)
(72) Inventor: VISSER, Huib, 5502 VK Veldhoven (NL)
(74) Representative: Sarlet, Stephanie

(57) **Abstract**

Inductive wireless power transfer device comprising a transmit coil for generating a magnetic field with a magnetic field intensity suitable for power transmission through magnetic induction, wherein the transmit coil comprises at least one halo antenna structure (100) comprising a first winding (101) for generating the magnetic field and a second winding (102) for reducing the magnetic field intensity of the magnetic field in a central area of the transmit coil.

## Description

### Field of the disclosure

The present disclosure relates to an inductive wireless power transfer device, an inductive wireless power transfer system using said device.

### Background art

Wireless Power Transfer (WPT) uses electromagnetic fields to transfer power over a distance. Of the two known WPT methods, Radiative WPT for longer distances and Inductive WPT for near contact, the latter is the most efficient and may reach power conversion efficiencies well over 95%. An example where Inductive WPT (IWPT) is well known is the charging of smartphones. A transmitting coil in a charging pad is brought in near contact with a receiving coil in a smartphone and through magnetic induction at a relatively low frequency (6.78 MHz), power is transferred from the transmitter (pad) to the receiver (phone).

IWPT is also used for directly powering or charging batteries of bio-medical implants. With a desire for bio-medical implants to become smaller while data rates for transferring sensor data out of the body are increasing, risks of interference between IWPT and communication arise. Another use case example for IWPT is a sensor embedded into asphalt or concrete for predictive maintenance.

KR 102258706 B1 discloses a pseudo-isotropic antenna that includes: a first split ring resonator (SRR) having a first end and a second end; a second SRR spaced apart to have a predetermined space outside the first SRR, disposed on the same plane as the first SRR, and having a first end and a second end; a first connecting portion connecting the first end of the first SRR and the first end of the second SRR to each other; a second connecting portion connecting the second end of the first SRR and the second end of the second SRR to each other and spaced apart from the first connecting portion by a predetermined distance to form a gap; and a resonator disposed in the gap. The resonator allows operation in multiple bands. It is suggested that the pseudo-isotropic antenna could be used for WPT.

### Summary of the disclosure

It is an aim of the present disclosure to provide an IWPT device wherein risks of interference between a magnetic field used for IWPT and electronic components of an IWPT receiver device, in particular components located in a central area of an IWPT receiver coil, may be reduced.

It is another aim of the present disclosure to provide an IWPT system comprising an IWPT transmitter device and an IWPT receiver device, wherein risks of interference between a magnetic field used for IWPT and electronic components of the IWPT receiver device, in particular components located in a central area of the IWPT receiver coil, may be reduced.

At least one of these aims, and/or other aims, may be achieved by the aspects and embodiments disclosed herein.

In a first aspect, which may be combined with other aspects and/or embodiments described herein, the present disclosure relates to an IWPT device comprising a transmit coil for generating a magnetic field with a magnetic field intensity suitable for power transmission through magnetic induction to an electronic device provided with an IWPT receiver coil, such as for example a bio-medical implant. The transmit coil comprises at least one halo antenna structure comprising a first (outer) winding for generating the magnetic field and a second (inner) winding for reducing the magnetic field intensity of the magnetic field in a central area of the transmit coil.

In other words, the first or outer winding(s) of the halo antenna structure(s) is/are (mainly) provided for generating the magnetic field at a predetermined frequency (typically in the MHz range, e.g. 6.78 MHz) and intensity suitable for IWPT to a receiver coil in the near field. The second or inner winding(s) of the halo antenna structure is/are (mainly) provided for reducing the magnetic field intensity of (or at least partly attenuating) the magnetic field that is generated by means of the first or outer winding(s) in a central area of the transmit coil.

As a result of this halo antenna structure, on the receiver side the central area inside the IWPT receiver coil becomes or remains available for electronic components. Due to the presence of the inner winding, the risk of interference between the magnetic field used for IWPT and the electronic components in the central area may be minimized.

In embodiments, the/each halo antenna structure is a planar structure of which the first winding is an outer winding and the second winding is an inner winding, preferably concentrical with the outer winding and at a predetermined separation from each other. The closer the outer and inner windings are, the lower the central magnetic field intensity will be and the lower the mutual inductance will be. So a compromise between coupling and low central field intensity may be found through selecting the separation of the outer and inner windings, as explained further herein. The predetermined separation may for example be in a range of 1 to 20% of the (outer) radius of the transmit coil.

In embodiments, the second or inner winding may be provided for generating an opposite magnetic field to at least partly compensate the first magnetic field generated by the first or outer winding in the central area.

In embodiments, the central area is a predetermined area in the centre of the transmit coil with a radius of at least 50%, preferably at least 75% of the (outer) radius of the transmit coil.

In embodiments, the inner winding(s) of the at least one halo antenna structure is/are provided for reducing the magnetic field in the central area by at least 9 dB for a winding separation that is no more than 20% of the (outer) radius of the transmit coil. The inventors have found that magnetic field reduction can be higher for a smaller winding separation, for example at least 25 dB for a winding separation of no more than 10%

In embodiments, the transmit coil may comprise a plurality of such halo antenna structures, concentrical in the same plane and/or stacked on top of each other. This may lead to a stronger mutual inductance and thus to a higher inductive power transfer compared to a single halo antenna structure.

In embodiments, the IWPT device may be provided for directly powering or charging a battery of a bio-medical implant through IWPT.

In embodiments, the transmit coil of the IWPT device may be configured for wirelessly powering or charging a receiver device while avoiding interference with IR-UWB radio circuitry located in a corresponding central area of a corresponding receiver coil of the receiver device.

In a second aspect, which may be combined with other aspects and/or embodiments described herein, the present disclosure relates to an IWPT system, comprising an IWPT transmitter device and an IWPT receiver device. The transmitter device may be an IWPT transmitter device as disclosed herein. The receiver device may comprise a receiver coil configured for receiving power through the magnetic field generated by the at least one halo antenna structure of such a transmitter device. The receiver coil may likewise comprise at least one halo antenna structure.

In embodiments, the receiver coil may comprise a loop antenna structure. It has been found that a halo-loop coupling, i.e. with a halo antenna structure in the transmitter device and a loop antenna structure in the receiver device, may have advantages over a halo-halo coupling and a traditional loop-loop coupling.

In embodiments, the receiver device may be a bio-medical implant.

In embodiments, the receiver device may be a sensor provided for being embedded into asphalt or concrete for predictive maintenance purposes.

In embodiments, the receiver device may comprise electronic components located in a central area of the receiver coil. The electronic components may for example comprise IR-UWB radio circuitry.

### Brief description of the drawings

Embodiments of the present disclosure will be discussed in more detail below, with reference to the attached drawings.
Fig. 1 shows a schematic view of an embodiment of an inductive wireless power transfer device according to the present disclosure.
Figs. 2 and 3 show graphs of simulation results for an embodiment of an inductive wireless power transfer device according to the present disclosure.
Fig. 4 shows an embodiment of an inductive wireless power transfer system using a device according to the present disclosure.
Figs. 5-9 show graphs of simulation results for comparing the operation of different wireless power transfer systems.
Fig. 10 shows a schematic view of another embodiment of an inductive wireless power transfer device according to the present disclosure, comprising a dual halo configuration.
Figs. 11-15 show graphs of simulation results for comparing the operation of different dual halo configurations.

### Description of embodiments

In the field of wireless data transmitters that are also wirelessly powered (for instance for wearable sensing devices), it is difficult to make the radio devices small. Compactness can only be achieved by placing the Inductive Wireless Power Transfer (IWPT) receive coil close to the (IR-UWB) radio circuitry. However, in that case, bringing the IWPT transmit coil close to the IWPT receive coil may create interference in the radio. This interference is caused by magnetic field injection into the radio.

The present disclosure provides a specially wound transmitter coil for inductive wireless power transfer that creates a reduced or 'null' magnetic field in the center of the coil. This may prevent magnetic field injection in the integrated circuit radio (including antenna) that is to be placed in the center of an aligned receiver coil. This may allow for simultaneous data communication and inductive wireless powering without mutual interference.

### Central Magnetic Field Minimization

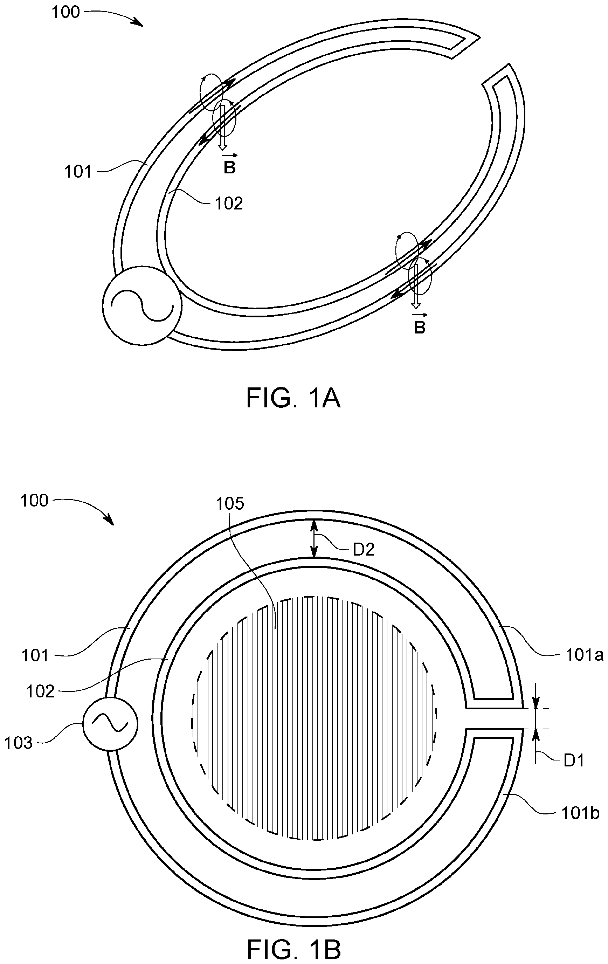

A standard IWPT transmitting coil yields a strong magnetic field at the centre of the coil. To decrease the magnetic field intensity in the centre of the coil, a second, inner winding is added, close to the first, outer winding. The second winding carries the current in the opposite direction. Thus, the magnetic fields in the centre of both windings is compensated (they at least partially cancel each other out), while the magnetic field in between the windings is added. Figure 1A schematically shows this principle and an embodiment of such a coil winding, in particular a halo structure. The arrows show the flow of the electrical current, the magnetic injunction around the currents (loop arrows) and the resulting net magnetic induction B.

A preferred embodiment of a halo structure 100, shown in Fig. 1B, comprises an outer winding 101 split into two halves 101a, 101b with a separation D1 opposite the power source 103. The separation D1 may for example be 1 to 10%, for example 5% of the radius of the outer winding. The inner winding 102 is located inwards from the outer winding 101 at a predetermined separation D2 thereof. The separation D2 may for example be 1 to 20%, preferably 1 to 10%, for example 5% of the radius of the outer winding. The end points of the outer half windings are connected to the end points of the inner winding, such that the direction of the current flowing through the outer winding is opposite the direction of the current flowing through the inner winding, as shown in Fig. 1A. A central area 105 inside the halo structure may for example be defined as a concentric area with a radius of at least 50%, preferably at least 75%, for example 80%, 85%, 90% or 95% of the radius of the outer winding. The aim of the present disclosure is to reduce or minimize the magnetic field in this central area.

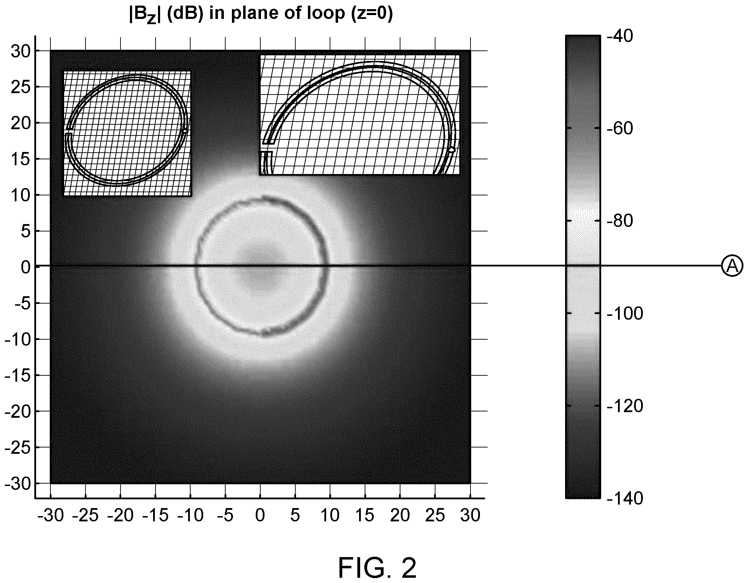

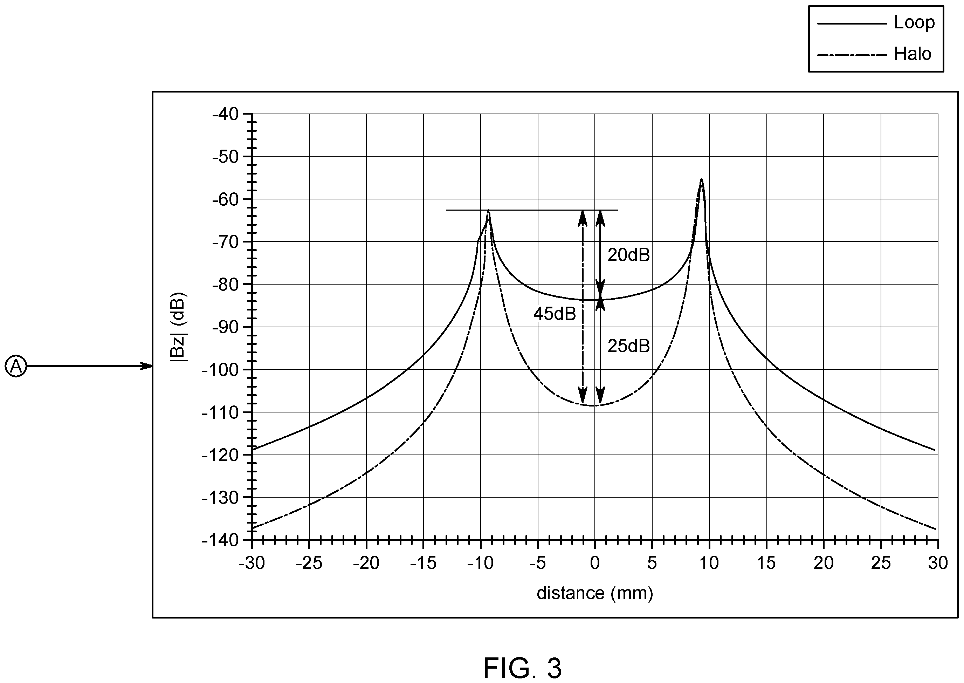

Figures 2 and 3 shows a simulation comparing a standard single turn coil (loop) with the halo structure. In particular, Figures 2 and 3 shows the perpendicular component of the magnetic induction |Bz| (dB), on a logarithmic scale, respectively in the plane of the halo (Fig. 2) and in a cut over this plane (Fig. 3). The Figures show how adding the inner loop with a slightly smaller radius may considerably reduce the magnetic field in the centre of the coil. In particular, the cross-sectional graph of Fig. 3 shows how the inner loop in this particular example reduces the magnetic field in the centre of the halo structure by 25 dB compared to the single turn coil.

The experimental results shown in Figure 2 are already good, but the magnetic field in the centre may be further minimized by tuning the distance D2 between the inner and outer loops. A smaller winding separation (as shown) is good to create a low central magnetic field amplitude but may lead to a poor coil-to-coil coupling. A wider separation may increase the coil-to-coil coupling but may also increase the central magnetic field amplitude. The separation D2 may for example be 1 to 20%, preferably 1 to 10%, for example 5% of the radius of the outer winding.

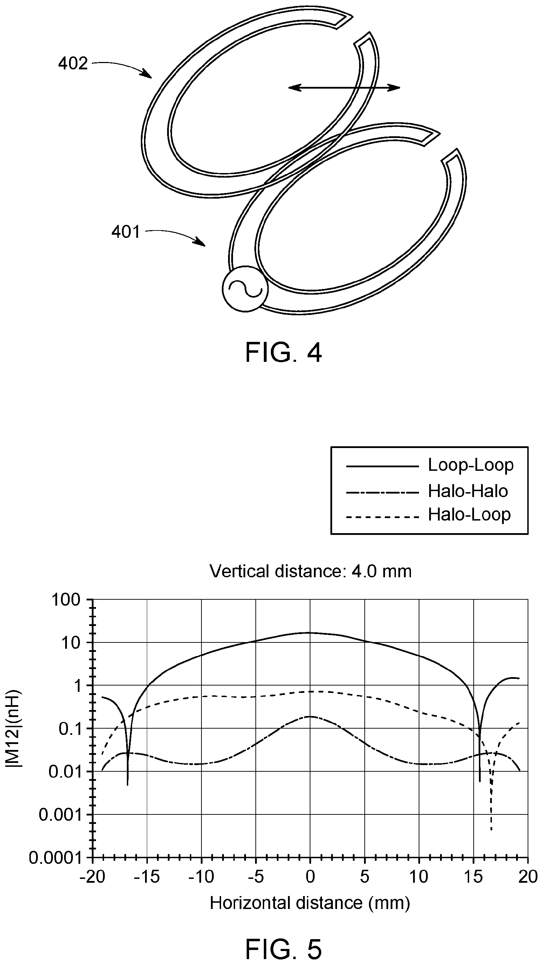

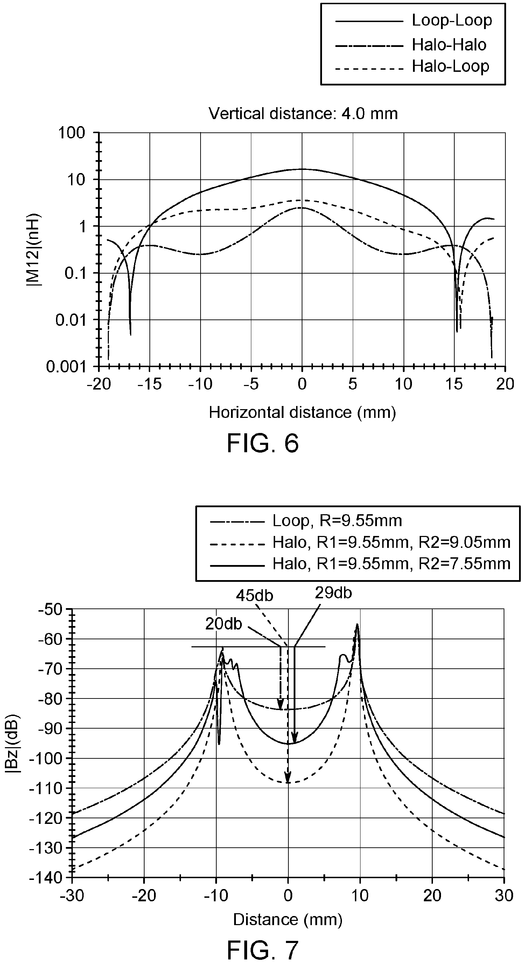

Further, the mutual inductance between the transmitter coil and the receiver coil may be considered, which may deteriorate as a result of mutual displacement. Figures 4-6 are used to compare the mutual inductance vs. lateral displacement for a loop-loop coupling, a halo-halo coupling and a halo-loop coupling. Fig. 4 shows the problem of lateral displacement. Fig. 5 shows the mutual inductance vs. lateral displacement for two loops (radius R = 9.55 mm; upper line), two halo-coils (outer radius R1 = 9.55 mm, inner radius R2 = 9.05 mm; lower line). Fig. 6 shows the same as Fig. 5 for a different halo configuration (outer radius R1 = 9.55 mm, inner radius R2 = 7.55 mm). The vertical displacement was set at 4 mm.

These figures show that loop-loop coupling gives the strongest mutual inductance, followed by halo-loop coupling. The Figure also shows that the halo-loop coupling is most displacement-invariant and may be optimized by choosing the right loop separation. So, the preferred embodiment for an IWPT system is a halo structure for transmission and a standard loop structure for reception.

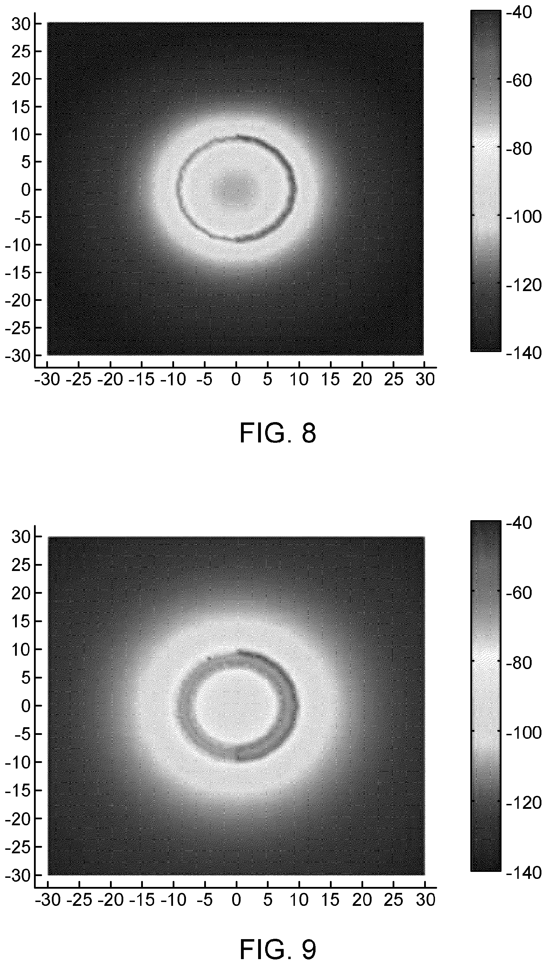

The magnetic field intensities for both halo-configurations of Figures 5 and 6 are shown in Figures 7-9, which respectively show a cross-sectional view of the graphs (magnetic field intensity vs. distance) and views in the plane of the halos. The Figures show that the halo with inner loop radius 7.55 mm forms a compromise between low central magnetic field intensity and high mutual inductance. Figure 7 shows that the magnetic field reduction becomes higher for a smaller winding separation, in particular about 25 dB for a winding separation of 0.5 mm, i.e. about 10% of the radius.

### Further embodiments

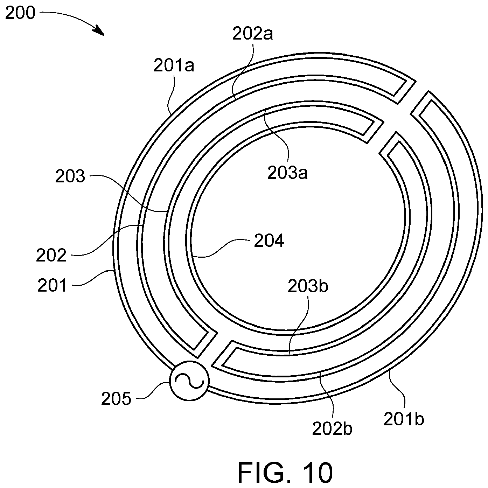

All the above calculations/simulations have been performed for single winding loop or double winding halo structures. For an effective IWPT operation, it is desirable to maximize the mutual inductance, which may be realized by using multiple windings. Further, by selecting the correct value for the wire/strip separation D2 in the halo antenna, a compromise or trade-off may be realized between a low centre magnetic field intensity and a high mutual inductance. Although the field intensity has been lowered considerably with respect to a standard loop and although the halo-loop mutual inductance approaches the loop-loop mutual inductance, further improvement may be realized, for example by adding a second halo structure as shown in Fig. 10.

In particular, the embodiment of Fig. 10 is a concentric double winding halo structure 200, comprising a first halo with an outer winding 201, split into two halves 201a, 201b with a separation opposite the power source 203, and an inner winding 202. The inner winding is likewise split into two halves 202a, 202b to provide connections with the second halo located inside the first halo. The second halo comprises an outer winding 203, likewise split into two halves 203a, 203b and an inner winding 204 connected to end points of the outer half windings 203a, 203b. In this way, the current flowing through the respective outer and inner windings is each time in the opposite direction. A central area 205 inside the double winding halo structure may for example be defined as a concentric area with a radius of at least 50%, preferably at least 75%, for example 80%, 85%, 90% or 95% of the radius of the outer winding of the outer halo. The aim of the present disclosure is to reduce or minimize the magnetic field in this central area.

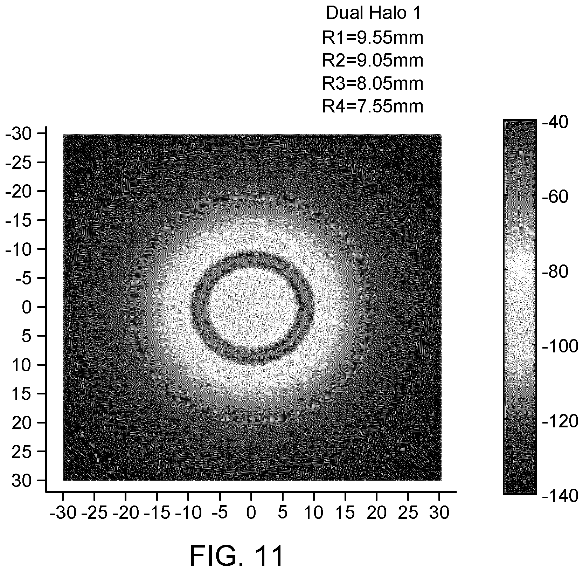

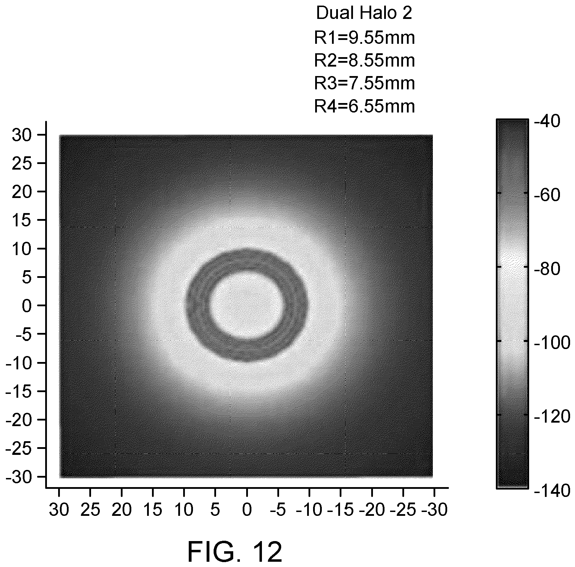

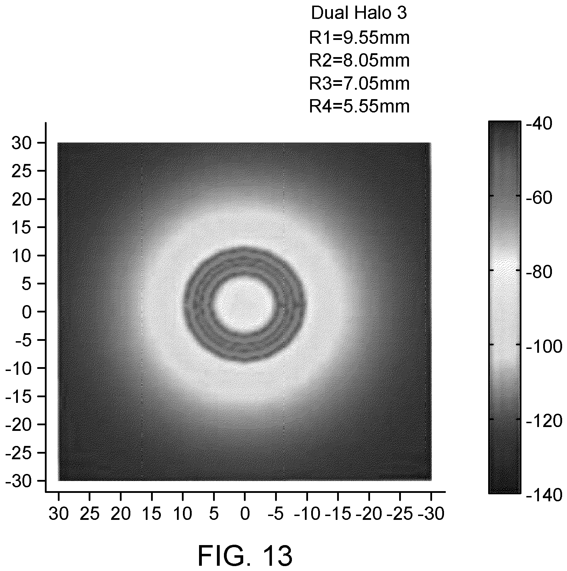

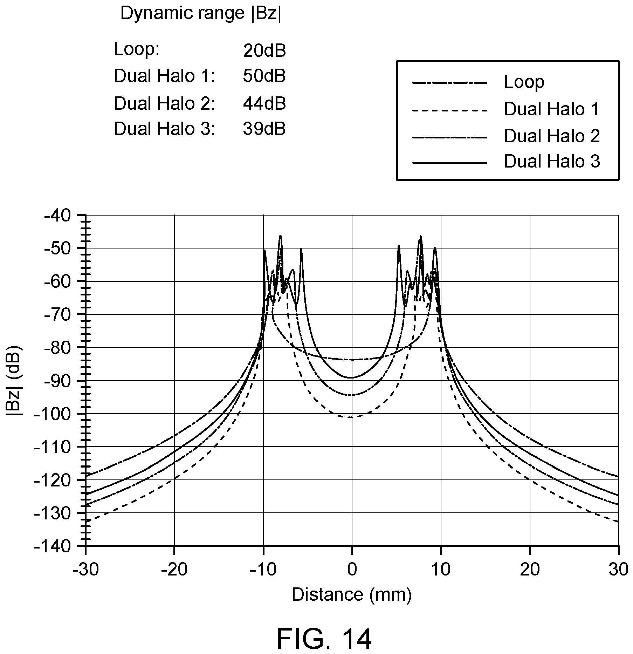

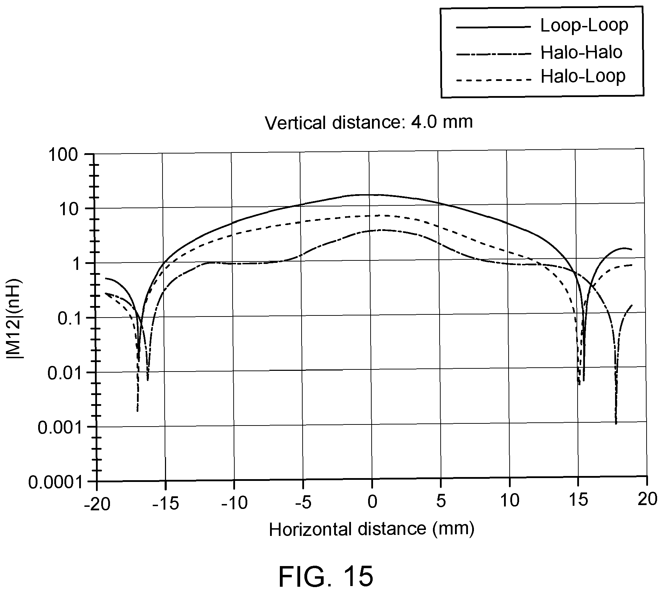

For this embodiment, it has been shown that the centre magnetic field intensity may be further improved with respect to a standard single loop and that the halo-loop mutual inductance vs. lateral displacement may further approach the loop-loop mutual inductance vs. lateral displacement. Simulations for three particular examples are shown in Figs. 11-15, named "Dual Halo 1", "Dual Halo 2" and "Dual Halo 3". The respective radii of the outer and inner windings R1-R4 are indicated on the Figures. By optimising the wire separations (i.e. changing the radii T1-R4), the centre magnetic field intensity and halo-loop mutual inductance can be improved. The Dual Halo 3 example has the better performance, as is shown by Figure 15 which shows the halo loop mutual inductance as a function of lateral displacement for the Halo 3 configuration.

### IWPT systems

The solutions presented above may be used in IWPT systems. As shown, preferred embodiments use a halo antenna structure on the transmitter side and a loop structure on the receiver side. An example of a system wherein these solutions may be used are: systems for powering and/or charging bio-medical implants. In view of the creation of the central coil area of near-zero magnetic field intensity, electronic components may be positioned in the receiver device within this area, such as for example IR-UWB radio circuitry.

### Data communication

The solutions presented above may be used in IWPT systems to maintain a compact IWPT configuration and radio communication solution, due to the creation of the central coil area of near-zero magnetic field intensity. Next to that, the solutions offer the possibility to use the transmitting coil alongside a low frequency IWPT, for high frequency (wide-band) data communication, simultaneously.

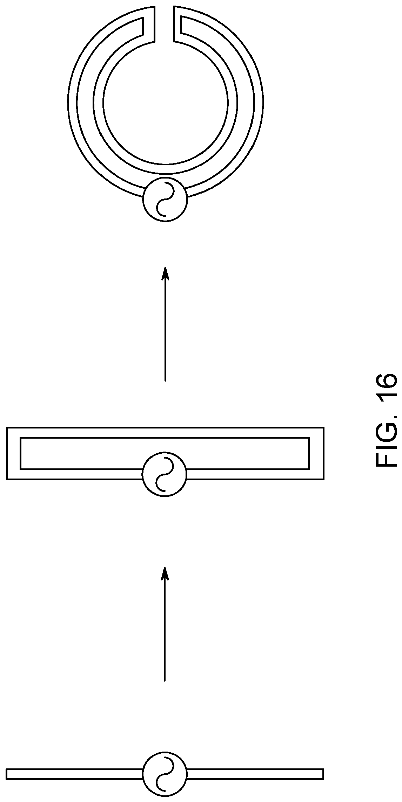

A well-known antenna is the so-called folded dipole antenna. That is an antenna that is constructed from a (half-wave) wire dipole antenna by adding a wire, connecting both ends of the wire dipole antenna. If this form is bent into a circular shape, a halo antenna structure is obtained which has the same shape as a modified IWPT coil according to the present disclosure. The design process is shown in Figure 16.

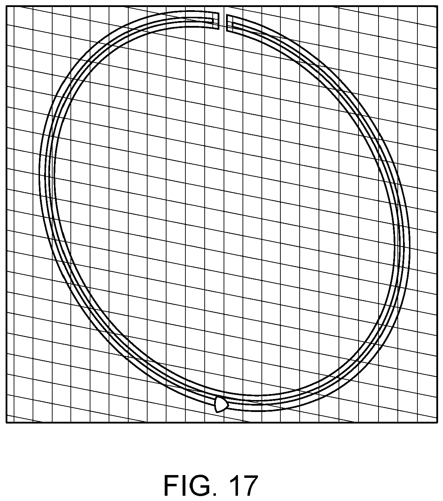

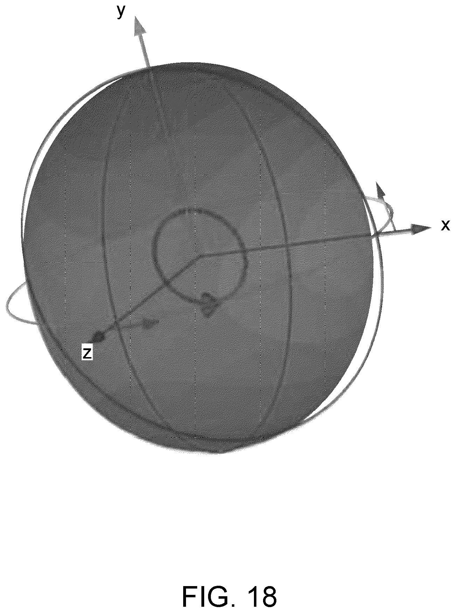

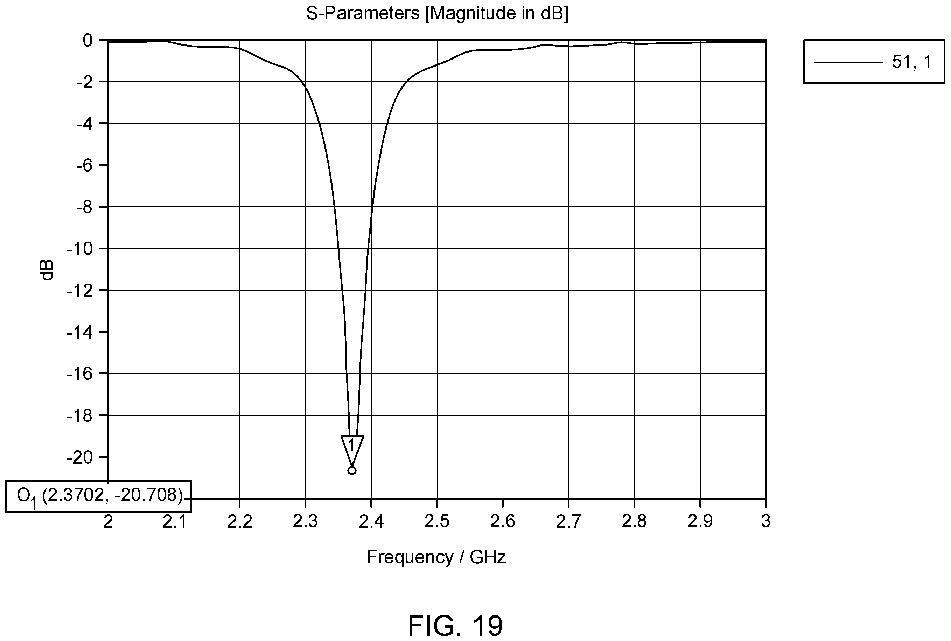

This halo-coil has been simulated with a full-wave electromagnetic solver for antenna functioning. This explains the chosen radii in the embodiments described herein. The results of these simulations are shown in Figures 17-19. Fig. 17 shows the structure realized as a copper strip. Fig. 18 shows the power radiation pattern, showing a 1 dBi realized gain. Fig. 19 shows the input reflection coefficient as a function of frequency. The simulations show that the structure functions as an antenna at 2.4 GHz.

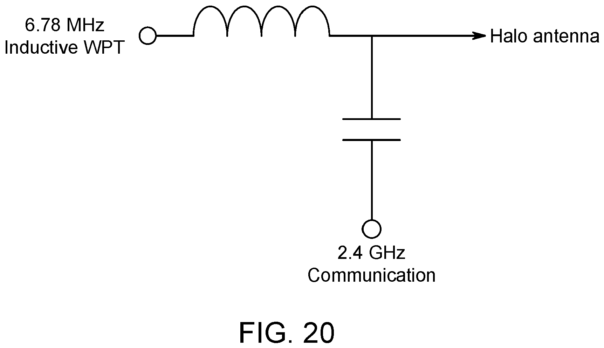

To use the structure for simultaneous IWPT and 2.4 GHz data communication, a combination of a low-pass and a high-pass filter may be used, see Figure 20.

For an effective IWPT operation, it is desirable to maximize the mutual inductance, which may be realized by using multiple windings, for example a dual winding halo antenna structure as shown in Fig. 10. Full-wave simulations for multiple-strip-winding folded dipole antennas have shown that this is possible without deteriorating the antenna functioning.

For example, for the configuration named Dual Halo 3, discussed above, it has been shown that the centre magnetic field intensity has improved 19dB with respect to a single loop and that the halo-loop mutual inductance has come very close to the loop-loop mutual inductance. Further experiments have shown that the antenna functioning is still present.

## Claims

1. Inductive wireless power transfer device comprising a transmit coil for generating a magnetic field with a magnetic field intensity suitable for power transmission through magnetic induction, wherein the transmit coil comprises at least one halo antenna structure comprising a first winding for generating the magnetic field and a second winding for reducing the magnetic field intensity of the magnetic field in a central area of the transmit coil.

2. The inductive wireless power transfer device according to claim 1, wherein the halo antenna structure is a planar structure of which the first winding is an outer winding and the second winding is an inner winding, concentrical with the outer winding.

3. The inductive wireless power transfer device according to claim 1 or 2, wherein the second or inner winding is provided for generating an opposite magnetic field to at least partly compensate, in the central area, the first magnetic field generated by the first or outer winding.

4. The inductive wireless power transfer device according to any one of the preceding claims, wherein the central area is a predetermined area in the centre of the transmit coil with a radius of at least 50% of the outer radius of the transmit coil.

5. The inductive wireless power transfer device according to any one of the preceding claims, wherein the inner winding(s) of the at least one halo antenna structure is/are provided for reducing the magnetic field in the central area by at least 9 dB for a winding separation that is no more than 20% of the outer radius of the transmit coil.

6. The inductive wireless power transfer device according to any one of the preceding claims, wherein the transmit coil comprises a plurality of the halo antenna structures.

7. The inductive wireless power transfer device according to claim 6, wherein the plurality of halo antenna structures comprises a first halo antenna structure and a second halo antenna structure which are concentrical in the same plane.

8. The inductive wireless power transfer device according to claim 6 or 7, wherein the plurality of halo antenna structures comprises halo antenna structures stacked on top of each other.

9. The inductive wireless power transfer device according to any one of the preceding claims, wherein the device is provided for directly powering or charging a battery of a bio-medical implant.

10. The inductive wireless power transfer device according to any one of the preceding claims, wherein the transmit coil is configured for wirelessly powering or charging a receiver device while avoiding interference with IR-UWB radio circuitry located in a corresponding central area of a corresponding receiver coil of the receiver device.

11. The inductive wireless power transfer device according to any one of the preceding claims, wherein the transmit coil is further configured for data communication, preferably simultaneously with inductive wireless power transfer.

12. An inductive wireless power transfer system comprising an inductive wireless power transfer transmitter device according to any one of the preceding claims and an inductive wireless power transfer receiver device, wherein the receiver device comprises a receiver coil configured for receiving power through the magnetic field generated by the at least one halo antenna structure.

13. The inductive wireless power transfer system of claim 12, wherein the receiver coil comprises a loop antenna structure.

14. The inductive wireless power transfer system of claim 12 or 13, wherein the receiver device is a bio-medical implant or a sensor provided for being embedded into asphalt or concrete for predictive maintenance purposes.

15. The inductive wireless power transfer system of any one of claims 12-14, wherein the receiver device comprises electronic components located in a central area of the receiver coil, for example IR-UWB radio circuitry.
